# EUROPÄISCHE PATENTSCHRIFT

(11) **EP 1 924 621 B1**
(45) Veröffentlichungstag und Bekanntmachung des Hinweises auf die Patenterteilung: **31.12.2008**
(21) Anmeldenummer: 06791626.2
(22) Anmeldetag: 23.08.2006
(51) Int. Cl.: C08G 18/10, C08G 18/48, C08G 18/71, C09J 175/04

(54) **NIEDRIGVISKOSE ALKOXYSILANGRUPPENAUFWEISENDE PREPOLYMERE, EIN VERFAHREN ZU IHRER HERSTELLUNG SOWIE IHRE VERWENDUNG**
PREPOLYMERS COMPRISING LOW-VISCOSITY ALKOXYSILANE GROUPS, METHOD FOR THE PREPARATION AND USE THEREOF
PREPOLYMERES CONTENANT DES GROUPES ALCOXYSILANE DE FAIBLE VISCOSITE, PROCEDE DE PRODUCTION ET UTILISATION ASSOCIES

(30) Priorität: 03.09.2005 DE 102005041953
(43) Veröffentlichungstag der Anmeldung: 28.05.2008
(73) Patentinhaber: Bayer MaterialScience AG, 51368 Leverkusen (DE)
(72) Erfinder: LUDEWIG, Michael, 51373 Leverkusen (DE); MATNER, Mathias, 41464 Neuss (DE); KOBELKA, Frank, 51375 Leverkusen (DE)
(86) Internationale Anmeldenummer: PCT/EP2006/008275
(87) Internationale Veröffentlichungsnummer: WO 2007/025668

(56) Entgegenhaltungen:
- EP-A1- 0 931 800
- EP-A2- 0 070 475
- WO-A1-99/48942

## Beschreibung

Die vorliegende Erfindung betrifft neuartige, niedrigviskose, alkoxysilangruppenaufweisende Prepolymere, ein Verfahren zur Herstellung sowie ihre Anwendung als Bindemittel für Klebstoffe, Dichtstoffe, Primer oder Beschichtungen.

Alkoxysilanfunktionelle Polyurethane, die über eine Silanpolykondensation vernetzen, sind lange bekannt. Ein Übersichtsartikel zu dieser Thematik findet sich z.B. in "Adhesives Age" 4/1995, Seite 30 ff. (Autoren: Ta-Min Feng, B. A. Waldmann). Derartige alkoxysilan-terminierte, feuchtigkeitshärtende Einkomponenten-Polyurethane werden in zunehmendem Maße als weichelastische Beschichtung-, Dichtungs- und Klebemassen im Bauwesen und in der Automobilindustrie verwendet.

Solche alkoxysilanfunktionellen Polyurethane können gemäß US 3,627,722 oder US 3,632,557 hergestellt werden, indem z.B. Polyetherpolyole mit einem Überschuss Polyisocyanat zu einem NCO-haltigen Prepolymer umgesetzt werden, das dann wiederum mit einem aminofunktionellen Alkoxysilan weiter umgesetzt wird. Das entstehende alkoxysilanfunktionelle Prepolymer enthält Harnstoff- und Urethangruppen in hoher Konzentration, die zu einer hohen Viskosität der Produkte führen.

Ein wirksames Konzept, zumindest den Anteil an der Wasserstoffbrückendichte, der durch die Harnstoffgruppen verursacht wird, zu reduzieren, ist es, durch die Verwendung von sekundären Aminosilanen substituierte Harnstoffe zu erzeugen. Dazu wurden verschiedene Verfahren vorgeschlagen; US 3,627,722 und US 3,632,557 verwenden alkylsubstituierte Aminosilane, US 4,067,844 addiert Acrylate an das primäre Aminosilan, EP-A 596 360 addiert Maleinsäureester an das primäre Aminosilan und EP-A 676 403 führt arylsubstituierte Aminosilane ein. All diese Verfahren können aber nur ein Wasserstoffatom an der terminalen Harnstoffgruppe ersetzten, alle weiteren Harnstoff- und Urethanprotonen tragen über Wasserstoffbrückenbindungen weiter zu einer hohen Viskosität bei.

Ein ebenfalls zweckmäßiges Konzept zur Verringerung der Dichte der Wasserstoffbrückenbindungen und damit der Viskosität wird in EP-A 372 561 offenbart. Dabei werden u.a. möglichst langkettige Polyetherpolyole bei einer geringen Vorverlängerung durch die Umsetzung mit dem Polyisocyanat verwendet. Dazu sind Polyether notwendig, die durch spezielle Herstellungsverfahren eine hohe Funktionalität bei einer geringen Unsättigung und Polydispersität haben. Weitere Aspekte dieser Technologie werden in WO 99/48942 und WO 00/26271 beleuchtet. Allerdings führt dieses Prinzip nur bei sehr langkettigen, für niedermodulige Bindemittel konzipierten Prepolymeren zu einen signifikanten Effekt und kann auch hier nur einen Teil der Wasserstoffbrückenbindungsdichte eliminieren.

Die Möglichkeit, durch die Verwendung von isocyanatfunktionellen Alkoxysilanbausteinen zu besonders niedrigviskosen Prepolymeren zu gelangen, wird u.a. in US 4,345,053 offenbart. Hier wird ein OH-funktionelles Prepolymer durch ein isocyanatfunktionelles Alkoxysilan terminiert, was letztlich die Einsparung einer Harnstoff-Gruppe pro Terminierung bedeutet. Allerdings enthält das OH-funktionelle Prepolymer noch Urethangruppen, die aus der Vorverlängerung eines Polyetherpolyols mit Diisocyanat resultieren. Diese können, wie ebenfalls in EP-A 372 561 offenbart, eingespart werden, indem speziell hergestellte langkettige Polyether mit einer geringen Unsättigung und Polydispersität eingesetzt werden. Allerdings werden bei der stöchiometrischen Umsetzung solcher isocyanatfunktionellen Alkoxysilanbausteine Bindemittel erhalten, die aufgrund unzureichender Verkappung vor allem bei der Verwendung sehr langkettiger Polyether bei der Aushärtung nicht ausreichend vernetzen können. Dies führt zu sehr weichen Polymeren mit einer hohen Oberflächenklebrigkeit und einem mangelnden Rückstellvermögen, bzw. einer hohen plastischen Deformierbarkeit.

Aufgabe der vorliegenden Erfindung war es nun, modifizierte alkoxysilangruppenaufweisende Prepolymere bereitzustellen, die diese im dem Stand der Technik dargelegten Nachteile bei vergleichbarer Viskosität nicht aufweisen.

Es wurde nun gefunden, dass sich Prepolymere mit den geforderten Eigenschaften herstellen lassen, indem man langkettige Polyether oder OH-funktionelle Polyetherprepolymere zunächst mit einem Überschuss isocyanatfunktionellem Alkoxysilans umsetzt und den Überschuss an Isocyanatgruppen durch eine anschließende Allophanatisierung oder eine Umsetzung mit einer niedermolekularen NCO-reaktiven Verbindung abbaut.

Gegenstand der Erfindung ist daher ein Verfahren zur Herstellung alkoxysilangruppenhaltiger Prepolymere, bei dem
A) 1,0 Val einer Polyolkomponente mit einem zahlenmittleren Molekulargewicht von 3.000 g/mol bis 20.000 g/mol, enthaltend ein oder mehrere Polyoxyalkylenpolyole oder Polyoxyalkylenpolyolprepolymere mit
B) 1,05 bis 1,50 Val einer isocyanat- und alkoxysilangruppenaufweisenden Verbindung der Formel (I), 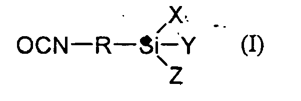 in welcher
   - X, Y, Z: unabhängig voneinander C₁-C₈-Alkyl- oder C₁-C₈-Alkoxyreste sind, wobei mindestens einer der Reste eine C₁-C₈-Alkoxygruppe ist und
   - R: ein beliebiger wenigstens difunktioneller organischer Rest ist, bevorzugt ein Alkylenradikal mit 1 bis 8 Kohlenstoffatomen,
   umgesetzt werden und anschließend
C) die verbliebenen freien NCO-Gruppen durch eine Allophanatisierung oder eine Reaktion mit isocyanatreaktiven Verbindungen weiter umgesetzt werden.

X, Y, Z können unabhängig voneinander auch verzweigt oder verbrückend sein.

Ist R ein Alkylenradikal kann dieses verzweigt oder zyklisch sein.

Bevorzugt sind X, Y, und Z in Formel (I) unabhängig voneinander Methoxy oder Ethoxy.

Für den Rest R ist ein Methylen- oder Propylenradikal besonders bevorzugt.

Ein weiterer Gegenstand der Erfindung sind auch die alkoxysilangruppenhaltigen Prepolymere, die nach dem erfindungsgemäßen Verfahren erhältlich sind.

Bevorzugt weist die Komponente A) ein zahlenmittleres Molekulargewicht von 8.000 g/mol bis 18.000 g/mol auf.

Als Polyolkomponente A) erfindungsgemäß einsetzbare Polyoxyalkylenpolyole sind die in der Polyurethan-Chemie üblichen Polyether, wie die unter Verwendung von zwei- bis sechswertigen Startermolekülen wie Wasser oder den oben genannten Polyolen oder 1- bis 4-NH-Bindungen aufweisenden Aminen hergestellten Additions- bzw. Mischadditionsverbindungen des Tetrahydrofurans, Styroloxids, Ethylenoxids, Propylenoxids, der Butylenoxide oder des Epichlorhydrins, insbesondere des Ethylenoxids und/oder des Propylenoxids. Bevorzugt sind im Durchschnitt 2 bis 4 Hydroxylgruppen aufweisende Propylenoxidpolyether, die bis zu 50 Gew.-% eingebaute Polyethylenoxid-Einheiten enthalten können. Es ist dabei sowohl denkbar, klassische Polyether, die auf Basis einer Katalyse mit z.B. Kaliumhydroxid hergestellt werden, einzusetzen, als auch solche Polyether, die mit den neueren Verfahren auf Basis der Doppelmetallcyanid-Katalysatoren hergestellt werden. Letztere Polyether haben in der Regel einen besonders niedrigen Gehalt an terminaler Unsättigung von weniger als 0,07 meq/g, enthalten deutlich weniger Monole und haben in der Regel eine geringe Polydispersität von weniger als 1,5. Es ist bevorzugt, solche, durch Doppelmetallcyanid-Katalyse hergestellte, Polyether zu verwenden. Besonders bevorzugt sind dabei Polyether, die eine Polydispersität von 1,0 bis 1,5 aufweisen; ganz besonders bevorzugt ist eine Polydispersität von 1,0 bis 1,3.

Die Polydispersität kann auf eine dem Fachmann an sich bekannte Methode ermittelt werden, indem durch Gelpermeationschromatographie (GPC) sowohl das zahlenmittlere Molekulargewicht (Mₙ) als auch das gewichtsmittlere Molekulargewicht (M_{w}) bestimmt werden. Die Polydispersität ergibt sich als PD = M_{w}/Mₙ.

Beispiele für solche bevorzugten Polyether sind die Produkte Acclaim^{®} 4200, Acclaim^{®} 6300, Acclaim^{®} 8200, Acclaim^{®} 12200 und Acclaim^{®} 18200 (oder die entsprechenden Acclaim^{®} xx00N-Typen) der Bayer MaterialScience AG, Leverkusen, DE.

Die erfindungsgemäß in A) eingesetzten Polyoxyalkylenpolyole haben bevorzugt zahlenmittlere Molekulargewichte von 3.000 g/mol bis 20.000 g/mol, besonders bevorzugt von 8.000 g/mol bis 18.000 g/mol.

Diese Polyoxyalkylenpolyole können in Reinform oder als Mischung aus verschiedenen Polyethern eingesetzt werden. Es ist denkbar, aber nicht bevorzugt, Polyole mit geringeren Molekulargewichten beizumengen.

Die verwendeten Polyether haben bevorzugt mittlere OH-Funktionalitäten von 1,8 bis 4, in Polyethermischungen können auch Polyether mit OH-Funktionalitäten von 1 bis 6 eingesetzt werden.

Es ist ebenfalls denkbar, statt reiner Polyoxyalkylenpolyole, OH-funktionelle Prepolymere zu verwenden, die erhältlich sind, indem man Polyoxyalkylenpolyole mit zahlenmittleren Molekulargewicht von 1.000 g/mol bis 15.000 g/mol durch Umsetzung mit Diisocyanaten auf ein Molekulargewicht von bevorzugt 3.000 g/mol bis 20.000 g/mol, besonders bevorzugt 8.000 bis 18.000 g/mol aufbaut, wie es z.B. in der US 4,345,053 oder der EP-A 931 800 beschrieben ist. Der Einsatz solcher OH-funktioneller Prepolymere ist aber nicht bevorzugt.

Als isocyanat- und alkoxysilangruppenaufweisende Verbindungen B) sind grundsätzlich alle alkoxysilangruppenhaltigen Monoisocyanate mit einem Molekulargewicht von 140 g/mol bis 500 g/mol geeignet. Beispiele für solche Verbindungen sind Isocyanatomethyltrimethoxysilan, Isocyanatomethyltriethoxysilan, (Isocyanatomethyl)methyldimethoxysilan, (Isocyanatomethyl)-methyldiethoxysilan, 3-Isocyanato-propyltrimethoxysilan, 3-Isocyanatopropylmethyl-dimethoxysilan, 3-Isocyanatopropyltriethoxysilan und 3-Isocyanatopropylmethyldiethoxysilan. Bevorzugt ist hier die Verwendung von 3-Isocyanatopropyltrimethoxysilan.

Auch ist es denkbar, isocyanatfunktionelle Silane zu verwenden, die durch Umsetzung eines Diisocyanates mit einem Amino- oder Thiosilan hergestellt wurden, wie sie in der US 4,146,585 oder der EP-A 1136495 beschrieben werden. Der Einsatz dieser Verbindungen ist aber nicht bevorzugt.

In der Regel wird das erfindungsgemäße Verfahren zweistufig durchgeführt. Für den Fall, dass der verbleibende, überschüssige Isocyanatgehalt durch eine anschließende Allophanatisierung abgebaut wird, ist es auch möglich, diesen Reaktionsschritt zusammen mit der zunächst notwendigen Urethanisierung der Komponenten A) und B) durchzuführen.

Die Urethanisierung der Komponenten A) und B) kann gegebenenfalls mit einem Katalysator durchgeführt werden. Als solche katalytisch wirksame Verbindungen kommen dem Fachmann an sich bekannte Urethanisierungskatalysatoren wie Organozinnverbindungen oder aminische Katalysatoren in Frage. Als Organozinnverbindungen seien beispielhaft genannt: Dibutylzinndiacetat, Dibutylzinndilaurat, Dibutylzinn-bis-acetoacetonat und Zinncarboxylate wie beispielsweise Zinnoctoat. Die genannten Zinnkatalysatoren können gegebenenfalls in Kombination mit aminischen Katalysatoren wie Aminosilanen oder 1,4-Diazabicyclo[2.2.2]octan verwendet werden.

Besonders bevorzugt wird Dibutylzinndilaurat als Urethanisierungskatalysator eingesetzt.

Im erfindungsgemäßen Verfahren wird diese Katalysatorkomponente sofern mitverwendet in Mengen von 0,001 bis 5,0 Gew.-%, bevorzugt 0,001 bis 0,1 Gew.-% und besonders bevorzugt 0,005 bis 0,05 Gew.-% bezogen auf Festgehalt des Verfahrensprodukts eingesetzt.

Die Urethanisierung der Komponenten A) und B) wird bei Temperaturen von 20 bis 200°C, bevorzugt 40 bis 120°C und besonders bevorzugt von 60 bis 100°C durchgeführt.

Die Reaktion wird fortgeführt, bis ein vollständiger Umsatz der OH-Gruppen der Verbindungen der Komponente A) erreicht ist. Der Verlauf der Reaktion kann durch geeignete, im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehalts, des Brechungsindex, des OH-Gehalts, Gaschromatographie (GC), kernmagnetische Resonanzspektroskopie (NMR), Infrarotspektroskopie (IR) und Nahinfrarotspektroskopie (NIR). Vorzugsweise wird der NCO-Gehalt der Mischung titrimetrisch bestimmt. Um den vollständigem Umsatz aller OH-Gruppen zu gewährleisten, ist es bevorzugt, auch nach Erreichen des theoretischen NCO-Gehalts die Reaktionsbedingungen beizubehalten bis eine Konstanz des NCO-Gehalts beobachtet wird.

Für den weiteren Abbau des NCO-Gehalts des Reaktionsproduktes der Komponenten A) und B) sind nach dem erfindungsgemäßen Verfahren zwei Wege möglich. Die erste Möglichkeit beinhaltet die Zugabe einer weiteren NCO-reaktiven Komponente C), die in einem anschließenden Reaktionsschritt mit den verbleibenden NCO-Gruppen zur Reaktion gebracht wird.

Als Komponente C) kommen niedermolekulare Verbindungen mit einem zahlenmittleren Molekulargewicht von bis zu 400 g/mol und mit einer oder mehreren Alkohol-, Amin- oder Thiolfunktionen in Frage, die auch noch andere Funktionalitäten enthalten können. Thiolverbindungen sind dabei aufgrund ihres häufig unangenehmen Geruchs weniger bevorzugt.

Beispiele für erfindungsgemäß einsetzbare, monofunktionelle Alkohole sind Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole (Phenole) wie Phenol, die isomeren Kresole oder Methoxyphenole, araliphatische Alkohole wie Benzylalkohol, Anisalkohol oder Zimtalkohol.

Beispiele für mehrfunktionelle Alkohole sind Ethylenglykol, Triethylenglykol, Tetraethylenglykol, Propandiol-1,2 und -1,3, Butandiol-1,4 und -1,3, Hexandiol-1,6, Octandiol-1,8, Neopentylglykol, 1,4-Bis(hydroxymethyl)cyclohexan, Bis(hydroxymethyl)tricyclo[5.2.1.0^{2.6}]decan oder 1,4-Bis(2-hydroxy-ethoxy)benzol, 2-Methyl-1,3-propandiol, 2,2,4-Trimethylpentandiol, 2-Ethyl-1,3-hexandiol, Dipropylenglykol, Polypropylenglykole, Dibutylenglykol, Polybutylenglykole, 1,4-Phenoldimethanol, Bisphenol A, Tetrabrombisphenol A, Glycerin, Trimethylolpropan, Hexantriol-1,2,6-Butantriol-1,2,4, Pentaerythrit, Chinit, Mannit, Sorbit, Methylglykosid und 4,3,6-Dianhydrohexite.

Als Amine lassen sich sowohl primäre als auch sekundäre Verbindungen, wie Ethylamin, Propylamin, Isopropylamin, n-Butylamin, sek.-Butylamin, tert.-Butylamin, Hexylamin, 2-Ethylhexylamin, Cyclohexylamin, Benzylamin, Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol einsetzen.

Weiterhin sind auch aromatische Amine, wie Anilin, Diphenylamin oder entsprechend substituierte Derivate geeignet.

Auch können Verbindungen mit mehreren Aminofunktionen, wie 1,3-Diaminopropan, 1,4-Diaminobutan, 1,6-Diaminohexan, 1,4-Diaminocyclohexan oder Isophorondiamin verwendet werden.

Ebenfalls sind Verbindungen, die sowohl Alkohol- als auch Aminofunktionen enthalten, wie z.B. Ethanolamin, 3-Aminopropanol, 2-Amino-2-methylpropanol, 2-Butylaminoethanol und Diethanolamin geeignet.

Darüber hinaus können auch Verbindungen eingesetzt werden, die sowohl isocyanatreaktiv als auch silanfunktionell sind. Beispiele solcher Verbindungen sind Aminopropyltrimethoxysilan, Mercaptopropyltrimethoxysilan, Aminopropyl-methyldimethoxysilan, Mercaptopropylmethyldimethoxysilan, Aminopropyltriethoxysilan, Mercaptopropyltriethoxysilan, Aminopropylmethyldiethoxysilan, Mercaptopropyl-methyldiethoxysilan, Aminomethyltrimethoxysilan, Aminomethyltriethoxysilan, (Aminomethyl)methyldimethoxysilan, (Aminomethyl)methyldiethoxysilan, *N-*Butyl-aminopropyltrimethoxysilan, *N-*Ethyl-aminopropyltrimethoxysilan, *N-*Phenyl-aminopropyltrimethoxysilan, *N*-(3-Triethoxysilylpropyl)asparaginsäurediethylester, *N-*(3-Trimethoxysilylpro-pyl)asparaginsäurediethylester und *N-*(3-Dimethoxymethylsilyl-propyl)asparaginsäurediethylester.

Es muss eine, dem verbleibenden NCO-Gehalt zumindest äquivalente Menge der Komponente C) beigemengt werden. Bevorzugt ist die Zugabe von 1 bis 1,5 Äquivalenten C) pro Äquivalent nach der Urethanisierung von A) und B) verbleibender NCO-Gruppe.

Es ist denkbar, weiteren Katalysator für die Umsetzung des überschüssigen Isocyanatgehaltes mit der Komponente C) zuzufügen, aber in der Regel nicht notwendig, da die Mischung aus der vorangegangenen Urethanisierung noch Katalysator enthält.

Der Abbau des überschüssigen Isocyanatgehaltes mit der Komponente C) wird bei Temperaturen von 20 bis 200°C, bevorzugt 40 bis 120°C und besonders bevorzugt von 60 bis 100°C durchgeführt. Wenn die Komponente C) leicht flüchtig ist, wird eine entsprechend niedrige Temperatur gewählt.

Die Reaktion wird fortgeführt, bis ein vollständiger Abbau der NCO-Gruppen (Gehalt an freien NCO-Gruppen < 0,5 Gew.-%, bevorzugt < 0,1 Gew.-%, besonders bevorzugt < 0,05 Gew.-%) erreicht ist. Dies kann analytisch durch die zuvor beschriebenen Methoden überprüft werden.

Die zweite Möglichkeit für den weiteren Abbau des NCO-Gehaltes des Reaktionsproduktes der Komponenten A) und B) ist eine Allophanatisierungsreaktion. Dabei wird auf die Zugabe einer weiteren Komponente C) verzichtet und die verbleibenden NCO-Gruppen werden mit den zuvor gebildeten Urethan-Gruppen zur Reaktion gebracht.

Um eine solche Allophanatisierung bei moderaten Temperaturen und relativ schnell durchzuführen, ist es bevorzugt, einen die Allophanatisierung fördernden Katalysator zu verwenden.

Als Allophanatisierungskatalysatoren können dem Fachmann an sich hierfür bekannten Verbindungen, wie die Zinksalze Zinkoctoat, Zinkacetylacetonat und Zink-2-ethylcaproat, oder Tetraalkylammoniumverbindungen, wie *N,N,N*-Trimethyl-*N*-2-hydroxypropylammoniumhydroxid, *N,N,N*-Trimethyl-*N-*2-hydroxypropylammonium-2-ethylhexanoat oder Cholin-2-ethylhexanoat verwendet werden. Bevorzugt ist die Verwendung von Zinkoctoat (Zink-2-ethylhexanoat) und der Tetraalkylammoniumverbindungen, besonders bevorzugt diejenige von Zinkoctoat.

Der Katalysator wird in Mengen von 0,001 bis 5,0 Gew.-%, bevorzugt 0,01 bis 1,0 Gew.-% und besonders bevorzugt 0,05 bis 0,5 Gew.-% bezogen auf Festgehalt des Verfahrensprodukts eingesetzt.

Der Allophanatisierungskatalysator kann in einer Portion auf einmal oder aber auch portionsweise oder auch kontinuierlich zugegeben werden. Bevorzugt ist Zugabe der gesamten Menge in einer Portion.

Die erfindungswesentliche Allophanatisierung wird bei Temperaturen von 20 bis 200°C, bevorzugt 40 bis 160°C, besonders bevorzugt von 60 bis 140°C, insbesondere bei 80 bis 120 °C durchgeführt.

Es ist unerheblich, ob das erfindungsgemäße Verfahrens kontinuierlich z.B. in einem StatikMischer, Extruder oder Kneter oder diskontinuierlich z.B. in einem Rührreaktor durchgeführt wird.

Bevorzugt wird das erfindungsgemäße Verfahren in einem Rührreaktor durchgeführt.

Auch hier kann der Verlauf der Reaktion, wie zuvor beschrieben durch geeignete im Reaktionsgefäß installierte Messgeräte und/oder anhand von Analysen an entnommenen Proben verfolgt werden.

Bevorzugt wird die Reaktion der Allophanatisierung solange geführt, bis der NCO-Gehalt des Produktes unter 0,05 Gew.-%, besonders bevorzugt unter 0,03 Gew.-% liegt.

Neben der zweistufigen Fahrweise, bei der zunächst mit einem speziellen Katalysator die Urethanisierung und anschließend, in einem zweiten Reaktionsschritt, mit einem zweiten Katalysator die Allophanatisierung durchgeführt wird, ist es nach dem erfindungsgemäßen Verfahren auch möglich, die Reaktion in einem Schritt durchzuführen. Dabei muss ein Katalysator verwendet werden, der sowohl die Urethanisierung wie auch die Allophanatisierung hinreichend schnell katalysiert. Ein solcher Katalysator ist z.B. Zink-2-ethylhexanoat.

Die erfindungsgemäßen Verbindungen eignen sich sehr gut als Bindemittel zur Herstellung von isocyanatfreien elastischen Polyurethankleb- und -dichtstoffen vorzugsweise für den Fahrzeugbau und Baubereich. Diese Klebstoffe vernetzen unter Einwirkung von Luftfeuchtigkeit über eine Silanolpolykondensation.

Eine Anwendung in Primem oder Beschichtungen ist ebenfalls denkbar.

Ein weiterer Gegenstand der Erfindung sind daher Klebstoffe, Dichtstoffe, Primer und Beschichtungen basierend auf den erfindungsgemäßen Polyurethanprepolymeren.

Zur Herstellung solcher Dicht- oder Klebstoffe können die erfindungsgemäßen Alkoxysilan-Endgruppen aufweisenden Polyurethanprepolymere zusammen mit den dabei üblichen Füllstoffen, Pigmenten, Weichmachern, Trockenmitteln, Additiven, Lichtschutzmitteln, Antioxidantien, Thixotropiermitteln, Katalysatoren, Haftvermittlern und gegebenenfalls weiteren Hilfs- und Zusatzstoffen nach bekannten Verfahren der Dichtstoffherstellung formuliert werden.

Als geeignete basische Füllstoffe einsetzbar sind gefällte oder gemahlene Kreiden, Metalloxide, -sulfate, -silicate, -hydroxid, -carbonate und -hydrogencarbonate. Weitere Füllstoffe sind z.B. verstärkende und nichtverstärkende Füllstoffe wie Ruß, Fällungskieselsäuren, pyrogene Kieselsäuren, Quarzmehl oder diverse Fasern. Sowohl die basischen Füllstoffe als auch die weiteren verstärkenden oder nichtverstärkenden Füllstoffe können gegebenenfalls oberflächenmodifiziert sein. Besonders bevorzugt einsetzbar sind als basische Füllstoffe gefällte oder gemahlene Kreiden sowie pyrogene Kieselsäuren. Auch Gemische von Füllstoffen können eingesetzt werden.

Als geeignete Weichmacher seien beispielhaft Phthalsäureester, Adipinsäureester, Alkylsulfonsäureester des Phenols oder Phosphorsäureester genannt. Auch langkettige Kohlenwasserstoffe, Polyether und pflanzliche Öle können als Weichmacher verwendet werden.

Als Thixotropiermittel seien beispielhaft pyrogene Kieselsäuren, Polyamide, hydrierte Rizinusöl-Folgeprodukte oder auch Polyvinylchlorid genannt.

Als geeignete Katalysatoren zur Aushärtung können alle metallorganischen Verbindungen und aminische Katalysatoren eingesetzt werden, die bekanntermaßen die Silanpolykondensation fördern. Besonders geeignete metallorganische Verbindungen sind insbesondere Verbindungen des Zinns und des Titans. Bevorzugte Zinnverbindungen sind beispielsweise: Dibutylzinndiacetat, Dibutylzinndilaurat, Dioctylzinnmaleat und Zinncarboxylate wie beispielsweise Zinn(II)octoat oder Dibutylzinn-bis-acetoacetonat. Die genannten Zinnkatalysatoren können gegebenenfalls in Kombination mit aminischen Katalysatoren wie Aminosilanen oder 1,4-Diazabicyclo[2.2.2]octan verwendet werden. Bevorzugte Titanverbindungen sind beispielsweise Alkyltitanate, wie Düsobutyl-bisaceteesigsäureethylester-titanat. Für die alleinige Verwendung von aminischen Katalysatoren sind insbesondere solche geeignet, die eine besonders hohe Basenstärke aufweisen, wie Amine mit Amidin-Struktur. Bevorzugte aminische Katalysatoren sind daher beispielsweise 1,8-Diazabicyclo[5.4.0]undec-7-en oder 1,5-Diazabicyclo[4.3.0]non-5-en.

Als Trockenmittel seien insbesondere Alkoxysilylverbindungen genannt wie Vinyltrimethoxysilan, Methyltrimethoxysilan, i-Butyltrimethoxysilan, Hexadecyltrimethoxysilan.

Als Haftvermittler werden die bekannten funktionellen Silane eingesetzt wie beispielsweise Aminosilane der vorstehend genannten Art aber auch N-Aminoethyl-3-aminopropyl-trimethoxy-und/oder N-Aminoethyl-3-aminopropyl-methyl-dimethoxysilan, Epoxysilane und/oder Mercapto-silane.

Die vernetzten Polymere zeichnen sich aus durch eine sehr gute Zugfestigkeit und hohen Modulus bei niedrigen Dehnungen. Zusätzlich ist die Klebrigkeit (Tack) sehr viel geringer als bei den nicht erfindungsgemäßen Vergleichsbeispielen. Dabei beobachtet man mit sinkendem NCO/OH-Verhältnis bei gleichem Molekulargewicht des Polymers eine Abnahme des Modulus und der Shore-Härte sowie eine Zunahme der Bruchdehnung.

### Beispiele

Alle Prozentangaben beziehen sich, sofern nicht abweichend angegeben, auf Gewichtsprozent.

Die Bestimmung der NCO-Gehalte in % wurde über Rücktitration mit 0,1 mol/l Salzsäure nach Reaktion mit Butylamin vorgenommen, Grundlage DIN EN ISO 11909.

Die Viskositätsmessungen wurden mit einem Platte-Platte Rotationsviskosimeter, RotoVisko 1 der Firma Haake, DE nach ISO/DIS 3219:1990 durchgeführt.

Die zur Zeit der Versuchsdurchführung herrschende Umgebungstemperatur von 23°C wird als RT bezeichnet.

### Beispiel 1 (erfindungsgemäß, Überschuss abreagiert durch Urethanisierung):

1009,8 g eines Polypropylenglykols der OH-Zahl 6,1 (Acclaim^{®} 18200N, Bayer MaterialScience AG, Leverkusen) wurden sechs Stunden lang im Vakuum (geringer Stickstoffdurchfluss) bei 120°C getrocknet. Dann wurden bei 60°C zunächst 28,88 g 3-Isocyanatopropyltrimethoxysilan (A-link 35^{®}, GE Advanced Materials, Wilton, Connecticut, USA) (Kennzahl 1,20) und dann 100 ppm Dibutylzinndilaurat (Desmorapid Z^{®}, Bayer MaterialScience AG, Leverkusen, DE) zügig zugegeben, und die Reaktion wurde weiter bei 60°C über fünf Stunden fortgeführt bis ein Rest-NCO-Wert von 0,09 % erreicht war. Die Reaktion wurde auf 50°C abgekühlt und es wurden 1,67 g Butandiol beigemengt. Es wurde für etwa 90 Minuten bei 50°C weiter gerührt, bis kein NCO-Gehalt mehr nachweisbar war. Das erhaltene Alkoxysilyl-Endgruppen aufweisende Polyurethanprepolymer hatte eine Viskosität von 35.000 mPas (23°C).

### Beispiel 2 (erfindungsgemäß, Überschuss abreagiert durch Allophanatisierung):

1009,8 g eines Polypropylenglykols der OH-Zahl 6,1 (Acclaim^{®} 18200N, Bayer MaterialScience AG, Leverkusen) wurden sechs Stunden lang im Vakuum (geringer Stickstoffdurchfluss) bei 120°C getrocknet. Dann wurden bei 60°C zunächst 26,46 g 3-Isocyanatopropyltrimethoxysilan (NCO = 19,2 %, A-link 35^{®}, GE Advanced Materials, Wilton, Connecticut, USA) (Kennzahl 1,10) und dann 100 ppm Dibutylzinndilaurat (Desmorapid Z^{®}, Bayer MaterialScience AG, Leverkusen, DE) zügig zugegeben, und die Reaktion wurde weiter bei 60°C über fünf Stunden fortgeführt bis ein Rest-NCO-Wert von 0,04 % erreicht war. Es wurden dann 1,0 g Zinkoctooat (Zink-2-ethylhexanoat, Octa-Soligen Zink 22, Borchers, Monheim, DE) zugegeben und bei 100°C für etwa sechs Stunden weitergerührt, bis kein NCO-Gehalt mehr nachweisbar war. Das erhaltene Alkoxysilyl-Endgruppen aufweisende Polyurethanprepolymer hatte eine Viskosität von 49.700 mPas (23°C).

### Vergleichsbeispiel:

918 g eines Polypropylenglykols der OH-Zahl 6,1 (Acclaim^{®} 18200N, Bayer MaterialScience AG, Leverkusen) wurden sechs Stunden lang im Vakuum (geringer Stickstoffdurchfluss) bei 120°C getrocknet. Dann wurden bei 60°C zunächst 21,88 g 3-Isocyanatopropyltrimethoxysilan (A-link 35^{®}, GE Advanced Materials, Wilton, Connecticut, USA) (Kennzahl 1,0) und dann 100 ppm Dibutylzinndilaurat (Desmorapid Z^{®}, Bayer Material Science AG, Leverkusen, DE) zügig zugegeben, und die Reaktion wurde weiter bei 60°C über fünf Stunden fortgeführt bis kein NCO-Gehalt mehr nachweisbar war. Das erhaltene Alkoxysilyl-Endgruppen aufweisende Polyurethanprepolymer hatte eine Viskosität von 34.000 mPas (23°C).

### Formulierung einer Fugendichtungsmasse

In einem handelsüblichen. Vakuum-Planetendissolver werden die folgenden Komponenten zu einem gebrauchsfertigen Dichtstoff verarbeitet:

### Stufe 1

- 24,3 Gew.-Teile: der erfindungsgemäßen alkoxysilangruppenhaltigen Prepolymere aus den Beispielen 1 und 2 sowie aus dem nicht erfindungsgemäßen Vergleichsbeispiel 1
- 36,3 Gew.-Teile: Weichmacher (Typ Jayflex DIDP der Fa: ExxonMobil Chemical)
- 36,5 Gew.-Teile: Fällungskreide (Typ: Socal ^{®} U1S2 der Fa. Solvay GmbH)
- 1,1 Gew.-Teile: Cab-o-Sil TS 720 (pyrogene Kieselsäure der Fa. Cabot GmbH)
- 1,1 Gew.-Teile: Vinyltrimethoxysilan
- 0,2 Gew.-Teile: Dibutylzinn-bis-acetoacetonat (10 %ig, gelöst in Jayflex DIDP)

Die Stufe 1 der Mischung wird bei einem Druck von 200 mbar insgesamt 15 Minuten dispergiert, davon 10 Minuten bei n = 3000 min⁻¹ und weiteren 5 Minuten bei n = 1000 min⁻¹ unter Kühlung und mit statischem Vakuum. Anschließend erfolgt die Einarbeitung von

### Stufe 2

### 0,5 Gew.-Teile N-Aminoethyl-3-aminopropylmethyl-dimethoxysilan

während 10 Minuten bei n = 1000 min⁻¹ unter Kühlung. Dabei wird 5 Minuten unter statischem sowie weiteren 5 Minuten unter dynamischem Vakuum gefahren.

Das Produkt wird in eine handelsübliche Polyethylenkartusche abgefüllt und bei Raumtemperatur gelagert.

Nach eintägiger Lagerung härtet die so hergestellte Dichtstoffmasse mit einer Hautbildungszeit von 10 bis 20 Minuten aus.

Die folgenden mechanischen Eigenschaften wurden nach vierzehntägiger Aushärtung bei 24°C und 50% relativer Luftfeuchte bestimmt:

| | Vergleichsbeispiel | Beispiel 1 | Beispiel 2 |
|---|---|---|---|
| Zugfestigkeit (DIN 53504), [N/mm²] | 1,6 | 2,1 | 1,8 |
| 100%-Modul (DIN 52455/1), [N/mm²] | 0,4 | 0,7 | 0,7 |
| Shore A-Härte (DIN 53505) | 17 | 24 | 25 |
| Klebrigkeit 1/3/7/14d* | 3/2/1/1 | 2/1/1/1 | 2/1/1/1 |

| | | | |
|---|---|---|---|
| *Scala von 1-5; 1 = klebfrei, 3 = leichte Oberflächenklebrigkeit, Schmutzteile haften an, 5 = stark klebendes Material, von anhaftendem Material kaum noch zu trennen. | | | |

### Zusammenfassung:

Die mechanischen Eigenschaften der formulierten Bindemittel zeigen zum Vergleichsbeispiel deutlich erhöhte Werte für die Shore-A Härte, die Zugfestigkeit und das 100 %-Modul sowie eine verringerte (subjektive) Klebrigkeit der Polymeroberflächen. All dies weist auf eine deutlich verbesserte Vernetzung der langen Polymerketten hin, die durch die erfindungsgemäße Vorgehensweise erreicht werden konnte.

## Patentansprüche

1. Verfahren zur Herstellung alkoxysilangruppenhaltiger Prepolymere, bei dem
A) 1,0 Val einer Polyolkomponente mit einem zahlenmittleren Molekulargewicht von 3.000 g/mol bis 20.000 g/mol, enthaltend ein oder mehrere Polyoxyalkylenpolyole oder Polyoxyalkylenpolyolprepolymere mit
B) 1,05 bis 1,50 Val einer isocyanat- und alkoxysilangruppenaufweisenden Verbindung der Formel (I), 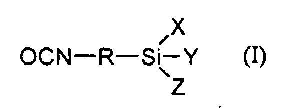 in welcher
X, Y, Z unabhängig voneinander C₁-C₈-Alkyl- oder C₁-C₈-Alkoxyreste sind, wobei mindestens einer der Reste eine C₁-C₈-Alkoxygruppe ist und
R ein beliebiger wenigstens difunktioneller organischer Rest ist, bevorzugt ein Alkylenradikal mit 1 bis 8 Kohlenstoffatomen,
umgesetzt werden und anschließend
C) die verbliebenen freien NCO-Gruppen durch eine Allophanatisierung oder eine Reaktion mit isocyanatreaktiven Verbindungen weiter umgesetzt wird.

2. Verfahren zur Herstellung alkoxysilangruppenhaltiger Prepolymere gemäß Anspruch 1, **dadurch gekennzeichnet, dass** X, Y, und Z in Formel (I) unabhängig voneinander eine Methoxy- oder Ethoxygruppe und R ist ein Methylen- oder Propylenradikal ist.

3. Verfahren zur Herstellung alkoxysilangruppenhaltiger Prepolymere gemäß Anspruch 1 oder 2, **dadurch gekennzeichnet, dass** in A) nur Polyoxyalkylenpolyole mit einem zahlenmittleren Molekulargewicht von 8.000 g/mol bis 18.000 g/mol eingesetzt werden.

4. Verfahren zur Herstellung alkoxysilangruppenhaltiger Prepolymere gemäß Anspruch 3, **dadurch gekennzeichnet, dass** die in A) eingesetzten Polyether einen Gehalt an terminaler Unsättigung von weniger als 0,07 meq/g und eine Polydispersität von weniger als 1,5 aufweisen.

5. Verfahren zur Herstellung alkoxysilangruppenhaltiger Prepolymere gemäß einem der Ansprüche 1 bis 4, **dadurch gekennzeichnet, dass** die Verbindungen der Komponente B) Molekulargewichte von 140 g/mol bis 500 g/mol aufweisen.

6. Verfahren zur Herstellung alkoxysilangruppenhaltiger Prepolymere gemäß einem der Ansprüche 1 bis 5, **dadurch gekennzeichnet, dass** in Stufe C) zur Urethanisierung isocyanatreaktive Verbindungen in solch einer Menge zugesetzt werden, dass pro freier NCO-Gruppe 1 bis 1,5 Äquivalente an isocyanatreaktiven Gruppen vorliegt.

7. Verfahren zur Herstellung alkoxysilangruppenhaltiger Prepolymere gemäß Anspruch 6, **dadurch gekennzeichnet, dass** der Gehalt an freien NCO-Gruppen nach der Urethanisierung in Stufe C) weniger als 0,05 Gew.-% bezogen auf das Reaktionsgemisch beträgt.

8. Verfahren zur Herstellung alkoxysilangruppenhaltiger Prepolymere gemäß einem der Ansprüche 1 bis 5, **dadurch gekennzeichnet, dass** in C) eine Allophanatisierung durchgeführt wird und der Gehalt an freien NCO-Gruppen nach der Allophanatisierung in Stufe C) weniger als 0,05 Gew.-% bezogen auf das Reaktionsgemisch beträgt.

9. Verfahren zur Herstellung alkoxysilangruppenhaltiger Prepolymere gemäß einem der Ansprüche 1 bis 8, **dadurch gekennzeichnet, dass** in Stufe C) ein Katalysator eingesetzt wird.

10. Alkoxysilangruppenhaltige Prepolymere erhältlich nach einem Verfahren gemäß einem der Ansprüche 1 bis 9.

11. Verwendung alkoxysilangruppenhaltiger Prepolymere gemäß Anspruch 10, bei der Herstellung von Klebstoffen, Dichtstoffen, Primern oder Beschichtungen.

12. Substrate beschichtet, verklebt oder abgedichtet mit Überzügen erhältlich aus alkoxysilangruppenhaltigen Prepolymeren gemäß Anspruch 10.

## Claims

1. Process for the preparation of prepolymers containing alkoxysilane groups, wherein
A) 1.0 gram eq. of a polyol component having a number-average molecular weight of 3000 g/mol to 20,000 g/mol, containing one or more polyoxyalkylenepolyols or polyoxyalkylenepolyol prepolymers, is reacted with
B) 1.05 to 1.50 gram eq. of a compound of formula (I) containing isocyanate and alkoxysilane groups: 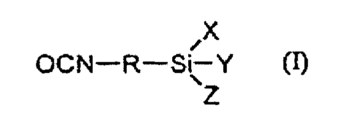 in which
X, Y, Z independently of one another are C₁-C₈ alkyl or C₁-C₈ alkoxy radicals, at least one of the radicals being a C₁-C₈ alkoxy group, and
R is any desired organic radical that is at least difunctional, preferably an alkylene radical having 1 to 8 carbon atoms,
and then
C) the remaining free NCO groups are then reacted further by an allophanatization or a reaction with isocyanate-reactive compounds.

2. Process for the preparation of prepolymers containing alkoxysilane groups according to Claim 1, **characterized in that** X, Y and Z in formula (I) independently of one another are a methoxy or ethoxy group and R is a methylene or propylene radical.

3. Process for the preparation of prepolymers containing alkoxysilane groups according to Claim 1 or 2, **characterized in that** only polyoxyalkylenepolyols having a number-average molecular weight of 8000 g/mol to 18,000 g/mol are used in A).

4. Process for the preparation of prepolymers containing alkoxysilane groups according to Claim 3, **characterized in that** the polyethers used in A) have a degree of terminal unsaturation of less than 0.07 meq/g and a polydispersity of less than 1.5.

5. Process for the preparation of prepolymers containing alkoxysilane groups according to one of Claims 1 to 4, **characterized in that** the compounds of component B) have molecular weights of 140 g/mol to 500 g/mol.

6. Process for the preparation of prepolymers containing alkoxysilane groups according to one of Claims 1 to 5, **characterized in that**, for the urethanization in step C), isocyanate-reactive compounds are added in an amount such that 1 to 1.5 equivalents of isocyanate-reactive groups are present per free NCO group.

7. Process for the preparation of prepolymers containing alkoxysilane groups according to Claim 6, **characterized in that** the content of free NCO groups after the urethanization in step C) is less than 0.05 wt.%, based on the reaction mixture.

8. Process for the preparation of prepolymers containing alkoxysilane groups according to one of Claims 1 to 5, **characterized in that** an allophanatization is carried out in step C) and the content of free NCO groups after the allophanatization in step C) is less than 0.05 wt.%, based on the reaction mixture.

9. Process for the preparation of prepolymers containing alkoxysilane groups according to one of Claims 1 to 8, **characterized in that** a catalyst is used in step C).

10. Prepolymers containing alkoxysilane groups obtainable by a process according to one of Claims 1 to 9.

11. Use of prepolymers containing alkoxysilane groups according to Claim 10 in the manufacture of adhesives, sealants, primers or coatings.

12. Substrates coated, adhesively bonded or sealed with coatings obtainable from prepolymers containing alkoxysilane groups according to Claim 10.

## Revendications

1. Procédé pour la préparation de prépolymères contenant des groupes alcoxysilane, dans lequel on fait réagir
A) 1,0 Val d'un constituant polyol avec un poids moléculaire moyen en nombre de 3 000 g/mol à 20 000 g/mol contenant un ou plusieurs polyoxyalkylènepolyols ou prépolymères de polyoxyalkylènepolyols avec
B) de 1,05 à 1,50 Val d'un composé présentant des groupes isocyanate et alcoxysilane de la formule (I), 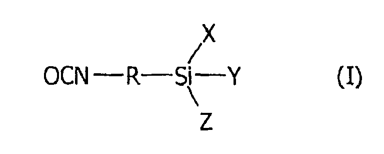 dans laquelle
X, Y, Z sont indépendamment l'un de l'autre des restes alkyle en C₁-C₈ ou alcoxy en C₁-C₈, au moins un des restes étant un groupe alcoxy en C₁-C₈ et
R est un reste organique quelconque au moins difonctionnel, de préférence un radical alkylène avec de 1 à 8 atomes de carbone,
et on fait ensuite encore réagir
C) les groupes NCO libres restants par l'intermédiaire d'une réaction de formation d'allophanate ou d'une réaction avec des composés réactifs aux isocyanates.

2. Procédé pour la préparation de prépolymères contenant des groupes alcoxysilane selon la revendication 1, **caractérisé en ce que** X, Y et Z dans la formule (I) sont indépendamment l'un de l'autre un groupe méthoxy ou éthoxy et R est un radical méthylène ou propylène.

3. Procédé pour la préparation de prépolymères contenant des groupes alcoxysilane selon la revendication 1 ou 2, **caractérisé en ce que** l'on utilise dans A) uniquement des polyoxyalkylènepolyols avec un poids moléculaire moyen en nombre de 8 000 g/mol à 18 000 g/mol.

4. Procédé pour la préparation de prépolymères contenant des groupes alcoxysilane selon la revendication 3, **caractérisé en ce que** les polyéthers utilisés dans A) présentent une teneur en insaturation terminale inférieure à 0,07 meq/g et une polydispersité inférieure à 1,5.

5. Procédé pour la préparation de prépolymères contenant des groupes alcoxysilane selon l'une quelconque des revendications 1 à 4, **caractérisé en ce que** les composés du constituant B) présentent des poids moléculaires de 140 g/mol à 500 g/mol.

6. Procédé pour la préparation de prépolymères contenant des groupes alcoxysilane selon l'une quelconque des revendications 1 à 5, **caractérisé en ce que** dans l'étape C) destinée à la formation d'uréthane on ajoute des composés réactifs aux isocyanates dans une quantité telle que de 1 à 1,5 équivalents de groupes réactifs aux isocyanates sont présents par groupe NCO libre.

7. Procédé pour la préparation de prépolymères contenant des groupes alcoxysilane selon la revendication 6, **caractérisé en ce que** la teneur en groupes NCO libres après la formation d'uréthane dans l'étape C) est inférieure à 0,05 % en poids rapporté au mélange réactionnel.

8. Procédé pour la préparation de prépolymères contenant des groupes alcoxysilane selon l'une quelconque des revendications 1 à 5, **caractérisé en ce que** l'on réalise dans C) une réaction de formation d'allophanate et la teneur en groupes NCO libres après la réaction de formation d'allophanate dans l'étape C) est inférieure à 0,05 % en poids rapporté au mélange réactionnel.

9. Procédé pour la préparation de prépolymères contenant des groupes alcoxysilane selon l'une quelconque des revendications 1 à 8, **caractérisé en ce que** l'on utilise dans l'étape C) un catalyseur.

10. Prépolymères contenant des groupes alcoxysilane obtenus selon un procédé selon l'une quelconque des revendications 1 à 9.

11. Utilisation de prépolymères contenant des groupes alcoxysilane selon la revendication 10 pour la préparation de colles, de matériaux d'étanchéité, de couches de fond ou de revêtements.

12. Substrats revêtus, collés ou rendus étanches avec des revêtements obtenus à partir de prépolymères contenant des groupes alcoxysilane selon la revendication 10.
